# EUROPEAN PATENT APPLICATION

(11) **EP 1 170 690 A1**
(43) Date of publication of application: **09.01.2002**
(21) Application number: 01305314.5
(22) Date of filing: 19.06.2001
(51) Int. Cl.: G06F 17/60

(54) **Shared and collaborative on-line shopping cart**

(30) Priority: 06.07.2000 US 611190
(71) Applicant: Hewlett-Packard Company, Palo Alto, CA 94304 (US)
(72) Inventor: Wilson, Michael R., Corvallis, OR 97330 (US)
(74) Representative: Jackson, Richard Eric

(57) **Abstract**

E-commerce is enhanced by the ability to share transaction details with non-parties to transaction by the e-commerce vendor or service provider, thus allowing said non-parties to then become active parties in the transaction. Access to the purchases or selections can be granted nearly simultaneously if the on-line vendor (112) of the goods and services has identified to it, the identity of entities (102, 120) to which the information is to be shared and thereafter transmits transaction data to such other parties. On-line purchases can be reviewed and/or approved by other parties prior to the completion of the transaction.

## Description

### FIELD OF THE INVENTION

This invention relates to a method and apparatus for conducting electronic commerce. In particular, the invention relates to a method and apparatus for facilitating commercial transactions via an electronic data network whereby several different individuals can participate in an e-commerce transaction.

### BACKGROUND OF THE INVENTION

The Internet is quickly becoming a vehicle by which electronic commerce can be conducted because it provides a very low cost yet high-speed communication link between purchasers and vendors of goods and services. As of the filing date of this application, an increasingly large number of mass merchandisers as well as niche retailers use the Internet (i.e. the World-Wide Web) to sell goods and services to customers. It is now possible to purchase virtually anything on line. Office supplies, automobiles, air line tickets, books, hotel accommodations and groceries can now all be purchased on-line.

One limitation in the way that prior art e-commerce is transacted is that the transaction details can be known only to the purchaser and the vendor because the transactions are effected by an individual's personal computer logging onto a vendor's web site. There is at present no provision for allowing e-commerce transactions to be shared with other parties. In many instances it might be valuable for different people to review or participate in an e-commerce transaction. By way of example, a purchasing agent for a large organization might wish to purchase computers or office equipment for several different employees, on-line. It might behoove the purchasing agent to allow the beneficiaries of his purchasing efforts to see what is being considered for purchase, before the purchasing transaction is completed. The ability to share with others, detailed information related to the on-line transaction would be very valuable. In other applications such as those set forth below, the ability to share information with several entities using a data network like the Internet would also be very valuable.

### SUMMARY OF THE INVENTION

Information about goods or services to be purchased or leased or rented or simply inspected from an on-line vendor or service provider can be shared with other parties, prior to consummating the transaction, so as to enable the details of an on-line transaction to be disclosed to, (or shared with) other parties having an interest in the transaction.

The entities with which details of a commercial transaction are to be shared with are identified in advance by the initial purchaser, to a web server computer (where "purchaser" refers to the entity transacting business on-line, either purchasing, leasing renting) in the form of a unique identifier known only to the initial purchaser. After the web server knows the identity of the entity to which the transaction information is to be shared, the transaction details can be sent to that entity by the web server. An electronic mail message, phone call or paging message can optionally be generated by the web server to notify the entity to whom (or to which) the transaction information is to be provided by the server.

### BRIEF DESCRIPTION OF THE DRAWINGS

Figure 1 shows a simplified block diagram of a network that couples the client computers of prospective purchasers of goods and servers to the server computers of vendors of goods and services.
Figure 2-1 through 2-3 shows a process flow chart for the method of the preferred embodiment by which purchase selections can be shared by several parties.
Figure 3 shows a simplified representation of an exemplary login web page by which a prospective purchaser of goods and services can be granted access to product information from the client server of a product or service vendor.
Figure 4 shows a simplified representation of an exemplary web page showing items available for purchase (lease, rent or selection) and information related thereto.
Figure 5 shows a simplified representation of an exemplary on-line metaphorical shopping basket into which three items for purchase have been placed by selections of items shown in Figure 4.
Figure 6 shows an exemplary web page display by which a person to whom the contents of the metaphorical shopping cart is to be shared, is identified.
Figure 7-1 shows an exemplary web page error message display advising the purchaser that a party, to whom the contents of the metaphorical shopping cart should be shared, is invalid.
Figure 7-2 shows an exemplary web page error message display advising the purchaser that a party, to whom the contents of the metaphorical shopping cart should be shared, is unauthorized.
Figure 8-1 shows an exemplary web page display by which a prospective purchaser is notified that another party to whom the shopping cart contents is to be disclosed, is not available to share the cart content information.
Figure 8-2 shows an exemplary web page display by which a prospective purchaser is notified that another party to whom the shopping cart contents is to be disclosed, was shared the information at an earlier time and was at that time unavailable.
Figure 9 shows an exemplary web page display depicting the contents of the purchaser's shared metaphorical electronic shopping cart, and a dialog box into which comments from reviewers of the cart contents can be entered and viewed.
Figure 10 shows an exemplary web page display depicting the contents of the co-shopper's shared metaphorical electronic shopping cart, and a dialog box into which comments from reviewers of the cart contents can be entered and viewed.
Figure 11 shows the appearance of a web page display that might be generated for a party to whom the cart's contents is being shared with notification and a link to view the shared cart.

### DETAILED DESCRIPTION OF THE PREFERRED EMBODIMENT

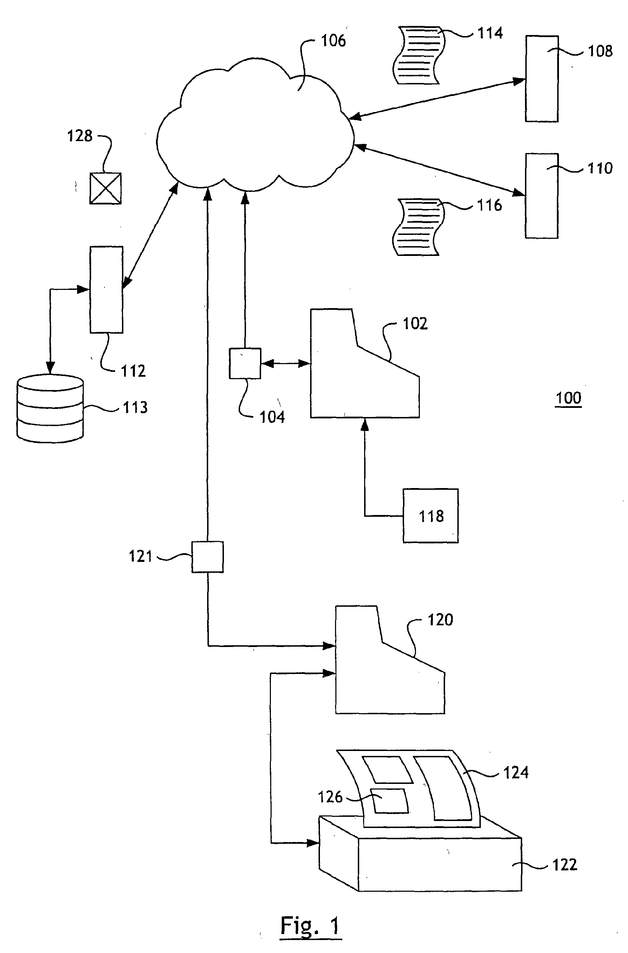

Figure 1 shows a simplified block diagram of an e-commerce network 100 that includes a computer network 106, such as the World-Wide Web of the Internet, to which are coupled web server computers 108, 110 and 112 of vendors of goods and services and the client computers 102, 120 of prospective purchasers of various goods and services. As is known to those skilled in the art, the Internet 106 is a network of computers coupled together via different media and switching systems that facilitates the conduct of electronic commerce, in part, because it uses standardized techniques for exchanging information. Web server computers of the web (such as servers 108, 110 and 112) are programmed to provide information (typically text and graphics) about goods and services offered by various vendors. Web servers can also provide interactive data exchanges with client computers that the servers communicate with via Internet service providers such as 104 and 121. A web server computer can accept data and commands from a client computer whereby the client computer can inform a server of goods or services that the client computer wishes to purchase. The server can ask for and accept payment by means of a credit card. In an e-commerce exchange, the client computers 102, 120 receive information (text and/or graphics) from the server computers 108, 110 and 112. The client computers can present this information obtained from the servers to a user. While hypertext transfer protocol ("HTTP") and other web programming and communications protocols are beyond the scope of this disclosure, a brief discussion of web-based e-commerce is provided herein for context, convenience and completeness.

The World Wide Web, which is also known simply as "the web", is part of the Internet (hereafter "the Web") and by virtue of predefined communication standards and protocols, allows a "server" computer system 108, 110 and 112, sometimes referred to as a web site, to send graphical and textual information to remote client computer systems 102, 120 if both the server and client computers are appropriately coupled to, or have an interface to, the World Wide Web/Internet from an Internet service provider 104, 121. In addition to being able to send text and graphical information to a remote client computer, a web server can also accept or receive information from a client computer.

A client computer system 102, 120 may be remotely located from a vendor's server computer system 108, 110, 112. A client system can request graphical and/or textual information from a server system by specifying from said client computer the Uniform Resource Locator or "URL" of the web page containing said information on the server. The requested information is transmitted from the server system to the client system and displayed on the client system using a commercially available web browser program.

When a web server receives the web page transfer request URL from the client, a copy of the computer data by which the web page is generated, is sent to the client computer system (downloaded) over perhaps a variety of switching systems and media. When the web page data is received at the client, the browser program running on the client computer interprets this data and causes the web page to be displayed on the client computer screen.

Figure 1 shows three web server computers (such as PCs, work stations, mainframes or other equivalents), identified by reference numerals 108, 110 and 112, each of which is independently coupled to the Web 106. Two client computers 102, 120 are also coupled to the Web 106.

Each of the servers 108, 110 and 112 typically corresponds to a web site of a different vendor, although alternate embodiments might include having one computer provide multiple web sites as well as having a single web site provided by a cooperative action of several computers. For purposes of this disclosure however, as used in this disclosure and the appended claims, a "server" and "server computer" should be construed to include at least one computer providing the functionality of one web site, as well as one computer providing the functionality of several web sites, and also several computers providing the functionality of a single web site and variants of these configurations. Server 108 for example, might provide the functionality of a web site for an office equipment manufacturer; server 110 might provide the functionality of a web site for an on-line brokerage service.

The client computers 102, 120 communication access to the servers 108, 110 and 112 via the data network, (which in the preferred embodiment is web but which might also be for example an Ethernet network or other technology by which information can be shared between computers) is provided by the switching equipment of various Internet service providers 104, 121 and communications companies. In most embodiments, client computers that communicate with web servers will be single-user, personal computers, however, for purposes of this disclosure and the appended claims, a "client computer" should be construed to include a single-user computer as well as a network of computers, including work stations, PCs, main frames and the like, spread over one or more locations and variants thereof.

In addition to Internet access service, access to the web, (or other data network, such as Ethernet) also requires a physical or wireless link between the computers and the network. For example, a modem and a telephone line (not shown), is a medium by which a communications link to the Internet service provider can be accomplished.

On-line commerce using the web can be enhanced for many users by allowing the on-line commerce details to be disclosed to (or shared with) other predetermined people, who might not be a party to the initial e-commerce transaction. In other words, it might be valuable to share details of an on-line transaction before, during or after the transaction is completed.

By using a metaphorical shopping basket, an e-commerce transaction can be shared with others if the "contents" of the "basket" are made available to others with whom the transaction details should be shared. Because the details of an e-commerce transaction (e.g., the number and specifications of items selected for purchase, prices and delivery) are in the custody of the vendor's web server, the details of an e-commerce transaction can be readily provided to another party if the vendor's web server is appropriately enabled and authorized to provide such information.

Authorization for the disclosure of e-commerce transactions could be mandated in some jurisdictions by civil and/or criminal statutes. The disclosure of transaction details to a third party, such as the items selected for purchase and the mechanism by which such items are paid for, might be prohibited under privacy, wiretapping, trade secret and other laws. Even in the absence of statutory prohibitions, civil liability might result if an on-line vendor distributes certain information. Without having the proper authorization to disclose such information to a third party, an on-line vendor might be subjected to civil claims of the original purchaser or subject to criminal prosecution for unauthorized interceptions and disclosures. By way of example, a purchasing agent for a large company, who intends to buy computer equipment and accessories on-line, might wish to have the specifications of the equipment being purchased, reviewed by the people for whom the equipment is being purchased. If the on-line vendor provides a shared and collaborative on-line shopping cart as described herein, the purchasing agent's equipment selection (i.e. the contents of the purchasing agent's metaphorical shopping cart) can be shared with co-workers who then might be enabled to approve, disapprove, comment about, add or delete items, if the vendor and/or purchasing agent have so authorized them. In such a scenario, a purchasing agent for a large concern would not want the details of purchases known to competitors or to unscrupulous employees.

In Figure 1, a web server for an on-line vendor (which would include a wholesale distributor, mass merchandiser or retailer) that provides to its on-line purchasers a shared and collaborative on-line shopping cart is represented by a computer identified by reference numeral 112. Coupled to the server computer 112 is a mass storage device 113. The mass storage device 113, typically a hard disk drive or drives, stores both application programs and data. Because the server computer 112 is a web server, application programs stored on the disk 113 would include the program(s) and data that generate images and text for the on-line vendor's web site. The disk will also typically store customer (service subscriber) and product offering information (data). It will also store product selection information, i.e. information identifying goods and services selected by a prospective customer or subscriber.

Product information stored in a database on the disk 113 might include pictures and narrative descriptions of the various products and/or services being offered by the on-line vendor. The mass storage device 113 might also store other information in the same or other databases, which includes the identity of individuals who are registered with the on-line vendor, or who are otherwise authorized to make purchases on-line. Such a database might also store the identity of individuals to whom purchase or product/service acquisition data can be shared, contact information (e-mail addresses, pager numbers), login ID and passwords, the company that an individual works for, credit or purchasing limits, an on-line basket ID as well as the items that might have previously been purchased or are under consideration for purchase, i.e. the current contents of the metaphorical shopping basket. The foregoing is all considered to be predetermined subscriber data and information. Data records and information stored on the servers 114, 116 and 128 can be any appropriate form.

The computer program(s) and data that create the appearance of a web page and that provides a shared and collaborative on-line metaphorical shopping cart which can be shared among predetermined individuals is preferably implemented using a programming language, such as Sun Microsystems' Java, and the Hypertext Markup Language or "HTML", both well-known to those skilled in the art and an understanding of which is not germane to this invention.

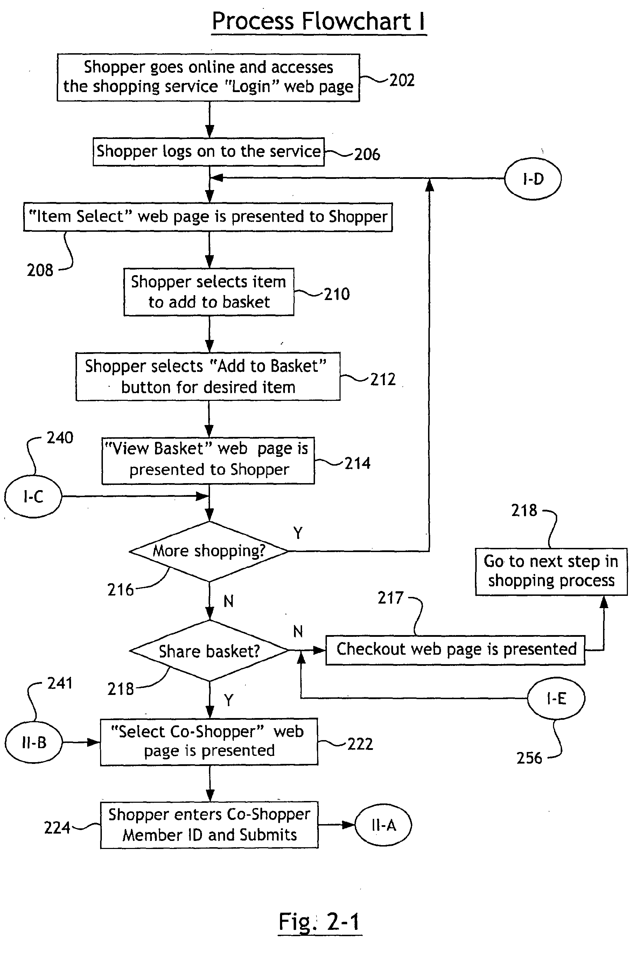

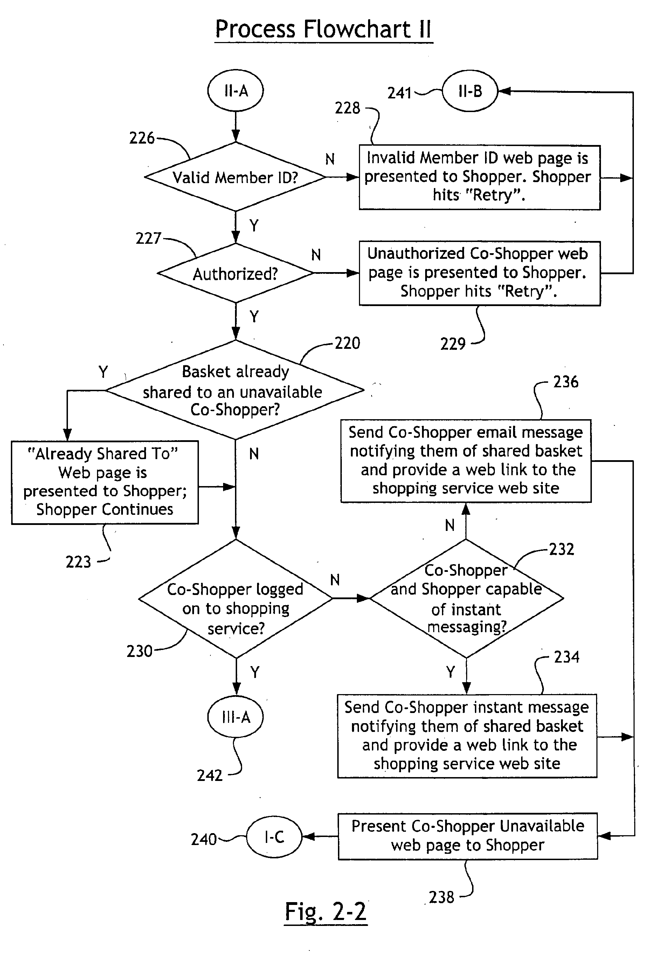

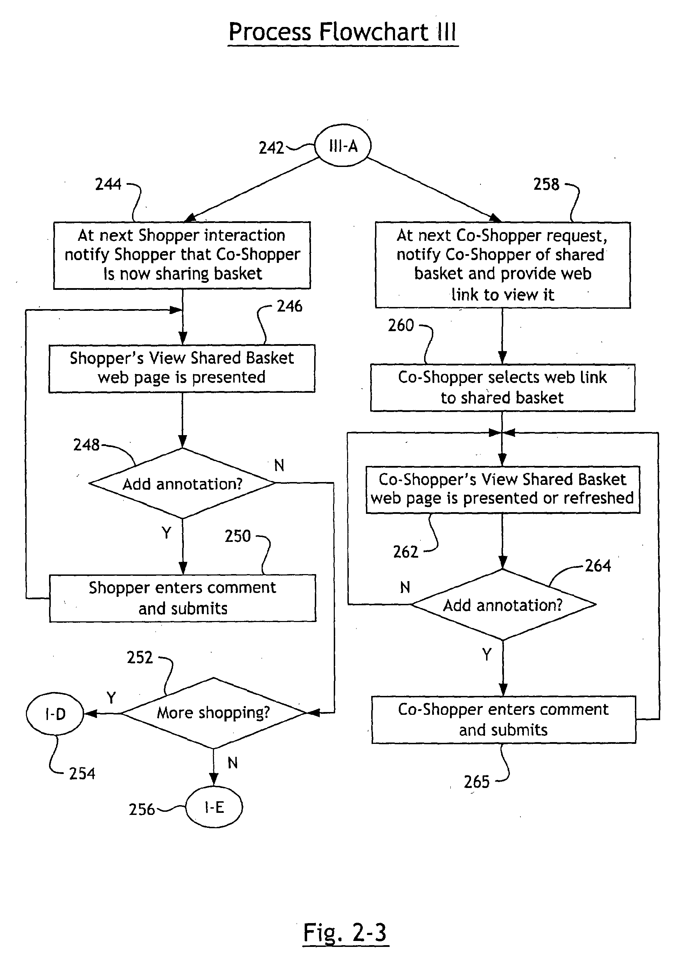

The various steps of the method by which a shared on-line shopping cart is provided to customers of an on-line business are shown in Figures 2-1 through 2-3. As used herein, a "purchase" using the disclosed methodology also includes a rental, lease or selection of goods. A "purchase" as contemplated herein also may include the solicitation of the performance of a service by a service provider.

With respect to Figure 2-1, the first step of the method 202 shows that an on-line shopper (not shown) "goes on-line" using an Internet web browser software application such as the Microsoft Internet Explorer™ or Netscape Navigator™. As is well known an Internet browser is a software application that runs on the users computer 102 and provides functionality required to communicate with and interact with web pages provided by client servers 108, 110 and 112, which are linked to the client/purchasers computer 102 via the Internet 106.

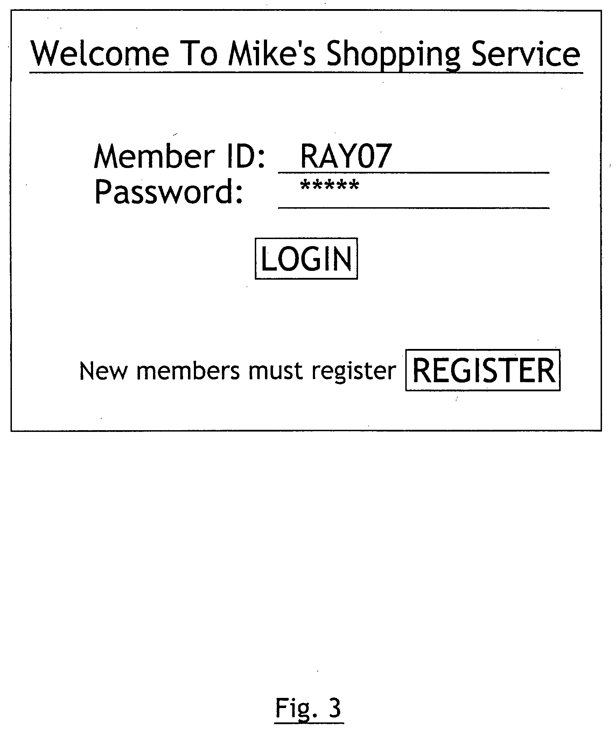

The next step of the method 206 includes a log on process by which the purchaser and/or his computer 102 is identified to and authenticated by the on-line vendor's server by providing to the server 112, a log in ID and/or password for example. Login Ids and passwords of subscribers, as well as their billing and payment information will typically be stored in the mass storage device 113 so that they can be retrieved by the server to properly authenticate a purchaser. Figure 3 shows an exemplary login web page that would be shown on a prospective purchaser's computer via information sent to it from the vendor's server 112. A member ID and a password, which is not echoed back to the client computer, are used by the server to authenticate the purchaser "logging on" to the server 112. The log on process in step 206 presumes that the on-line shopper using the computer 102 has been previously identified to an electronic commerce vendor, e.g. through a user registration process. Such data would be kept in a database on a storage device 113 coupled to the server 112. By comparing database records to data supplied by the client computer, the server can control and identify who logs onto it and who is purchasing goods and/or services.

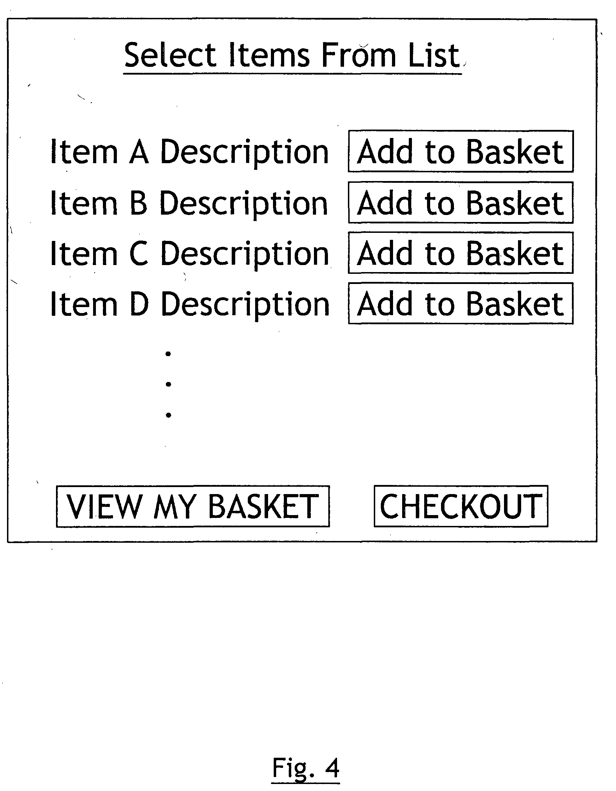

After the on-line shopper goes on-line in step 202 and logs onto the vendor's client web server in step 206, the server computer 112 will present to the on-line shopper via the web, an "ITEM SELECT" web page such as the exemplary web page shown in Figure 4. The ITEM SELECT page might include a variety of features that will depend upon the type and amount of information needed by a prospective purchaser. Instead of simply listing products as shown in Figure 4, a mass merchandiser might first ask the prospective purchaser to specify the types of products the purchaser is interested in purchasing. Figure 4 is for illustrative purposes only and shows that as part of an on-line or e-commerce transaction, product offerings are presented to, and selectable by, a prospective purchaser. Once the selections are made, making the selections available to others for their review, approval or augmentation is the salient aspect of the inventive concept disclosed herein.

In Figure 2-1, at step 210, the on-line shopper can select various items offered for sale by a vendor by inspecting and selecting items from a list that might be presented as shown in Figure 4. As shown in Figure 4, different items offered by the vendor might be briefly described. A decision to select an item for purchase can be effectuated simply by "clicking" on a sensitized area labeled "ADD TO BASKET" by which the server computer 112 will create a record in a database showing that the corresponding item has been selected for purchase by the individual identified to the server 112 during the login process. In step 212 shown in Figure 2-1, the electronic or on-line shopper effectively selects that item as an item for purchase by selecting the electronic "ADD TO BASKET" button metaphor shown in Figure 4. Once an item is metaphorically added to the metaphorical basket, the server 112 creates or modifies a database record identifying the item as having been selected by the logged in user.

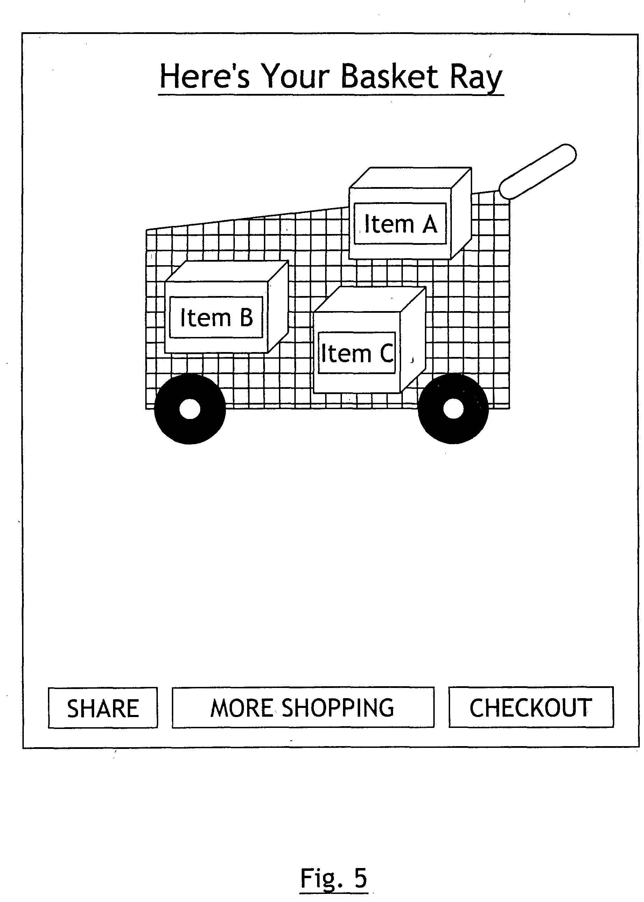

At the lower left hand corner of the exemplary web page shown in Figure 4, an electronic metaphorical button labeled "VIEW MY BASKET" allows the purchaser to view the "contents" of their electronic shopping basket as shown in Figure 5. Stated alternatively, in step 214 of the method shown in Figure 2-1, an electronic shopper can view the items that have been selected for purchase, which in the preferred embodiment are graphically depicted.as items in a basket.

In step 216, a decision can be made by the purchaser to conduct additional purchases or end the shopping session by selecting a "CHECK OUT" button depicted in Figure 4 at the lower right hand corner of the exemplary screen display. As shown in Figure 2-1, in step 216, if additional shopping is desired, program control loops back to step 208 whereat the item select web page is re-displayed to the shopper by the server 112 in step 208. Subsequent steps 210, 212 and 214 function as described above.

If as shown in step 216, no more purchases are to be effected by the purchaser, in step 218 the "shopper," who logged into the server 112 and known to the server 112 as the putative purchaser of the selected items, decides whether the "contents" of the metaphorical basket (i.e. the items selected for purchase) should be shared with other parties. If the purchaser declines to share the purchase information, the e-commerce transaction continues at step 217 with the checkout process and then on through any other subsequent steps 218 required by the service to complete the shopping transaction.

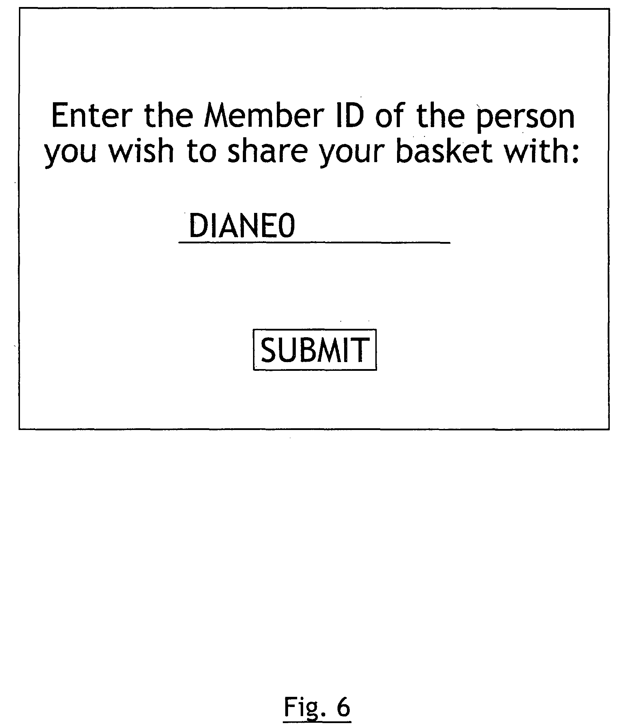

If the purchaser elects to share the transaction, the server as shown in Figure 6 solicits the identity of the person to whom the transaction is to be made available. Selection of the "SHARE" button metaphor in Figure 5 corresponds to an affirmative response at step 218 in Figure 2-1 by which the contents of the electronic metaphorical basket are to be shared with another user or customer of the vendor.

In step 222, the vendor's server 112 will query the original purchaser for the identity of a person or persons to which the contents of the electronic metaphorical shopping basket should be made available by the vendor's server 112. Depending upon the identity of the person (i.e. is the other viewer known to the server 112 and is the shopping basket already being shared), program control will transfer to either step 227 or 228 in Figure 2-2 depending upon whether the co-shopper's identity is valid as determined in step 226.

In Figure 6, shows an exemplary web page display by which the identity of a person to which the contents of the basket are to be shared with, is solicited by the server 112. A "MEMBER ID" would be used by the server 112 to identity to whom the transaction details should be provided, and by looking up in the server's data base records on the storage device 113, the server can determine if the co-shopper is valid or authorized.

In Figure 2-1, in step 222 presentation of the "SELECT CO-SHOPPER" web page is made by the client server 112 to the purchaser who was identified at the first login in step 206. Using an input web page, such as that shown in Figure 6, the original shopper provides the identity of the party (natural person or other entity) to whom (or to which) the purchase information is to be shared enables the shopper to selectively identify in advance the entities to which the information is to be provided by the vendor's server computer 112. Upon the provision of the identity of the "co-shopper" in step 224 and the identity validation in Figure 2-2, step 226, a determination is made in step 226 whether or not the person to which the contents are to be shared with is an authorized party to whom the e-commerce transaction details can be shared. Such an authorization might be made in advance using any appropriate message to the server 112. By requiring the co-shopper to at least be known to the vendor's server 112 helps insure that sensitive information of the shopper is not intentionally misappropriated or accidentally misdirected.

When used herein, the term "party" when referring to an original purchaser or co-shopper, to whom transaction details should or should not be disclosed, should not be construed to be limited to natural persons. As used in this disclosure and in the appended claims, the term "party" whether the original shopper or co-shopper) includes both individuals and organizations or other entities. Such terms are intended to also include the computer or computer equipment that a natural person or organization would use in an on-line transaction. Similarly, when referring to the sharing of information in a metaphorical basket between a "computer" such a term should be construed to include the "party" that uses and/or operates the computer.

In most applications of the disclosed methodology, commercial transactions are preferably kept secure for at least the reasons set forth above. Disclosing the details to such transactions should be limited to parties with a need to know or interest in the transaction and whose identity is known to one or both of the purchaser (of step 206) and the vendor.

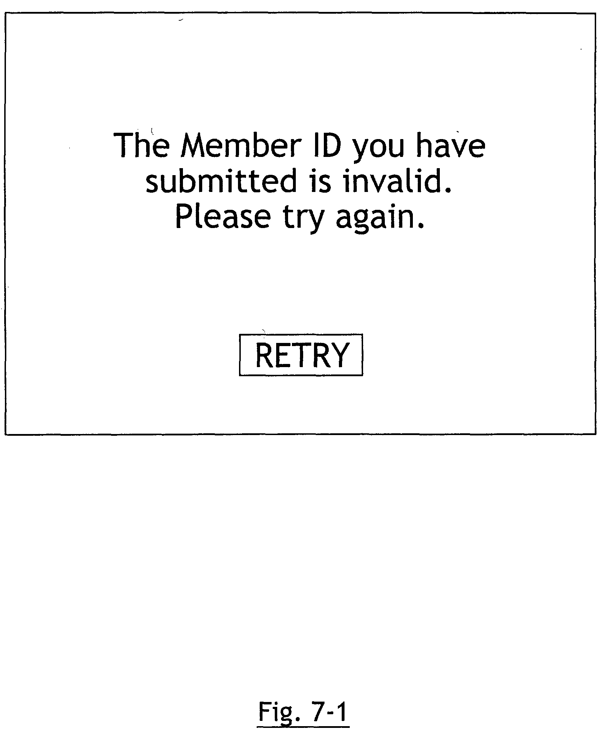

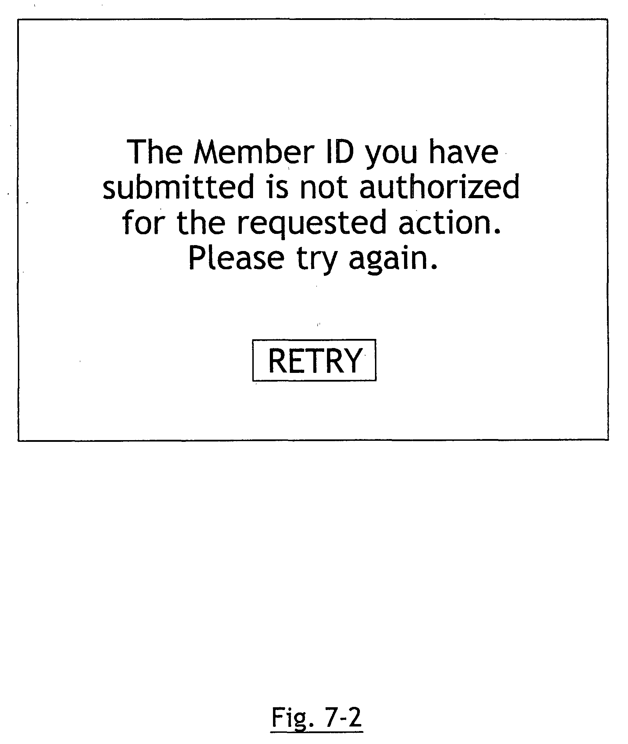

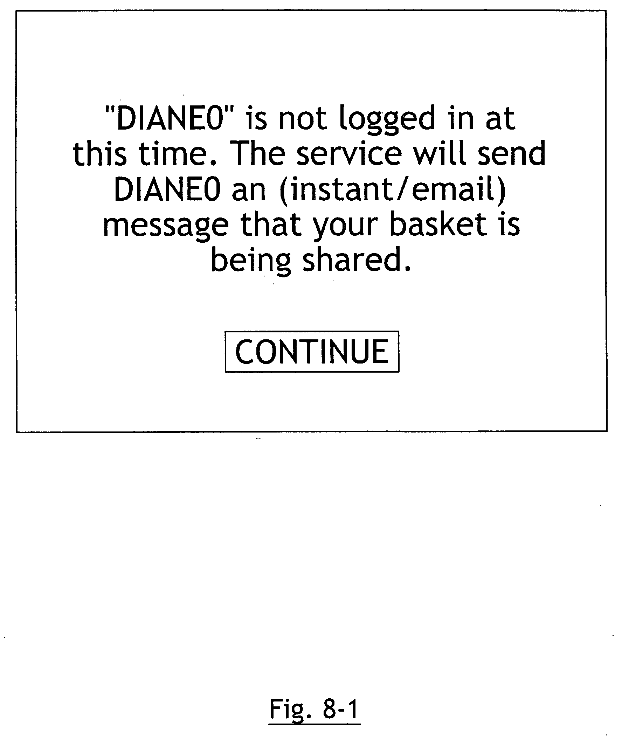

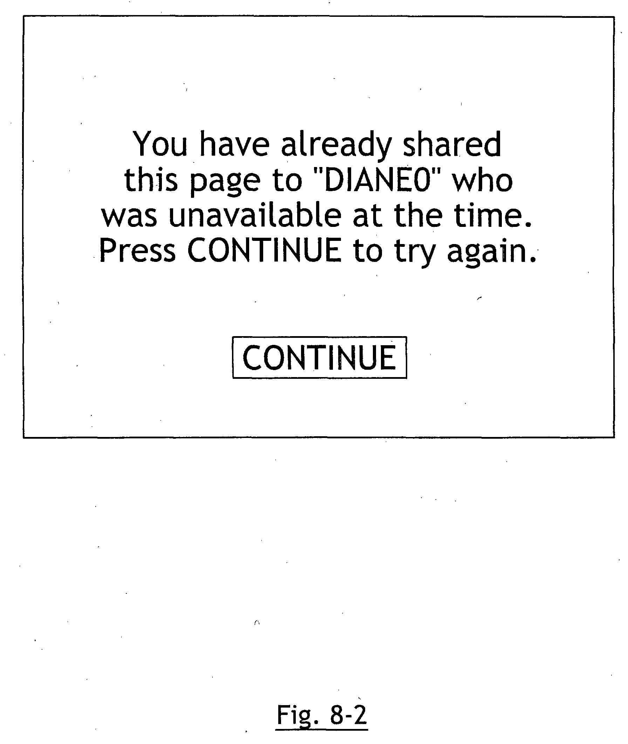

In step 228, if the person to whom the shopping cart contents are to be disclosed (as specified by the purchaser in step 224) is not known to the vendor's server 112, an error message can be generated and presented to the shopper with program control looping back to step 222. Figure 7-1 shows an exemplary web page that might be produced as a result of a determination by the server 112 that the party to which the transaction is to be disclosed, is not known to the vendor or his server computer 112. In step 229, if the server 112 determines in step 227 that the party to which the contents of the shopping cart (i.e. the transaction) are to shared is authorized, a determination is made in step 230 as to whether or not the shopping basket has already been shared to that party and they were previously unavailable, otherwise an error message can be generated and presented to the shopper with program control looping back to step 222. Figure 7-2 shows an exemplary web page that might be produced as a result of a determination by the server 112 that the party to which the transaction is to be disclosed is not authorized. If in step 220 it was determined that the basket contents has already been shared to the intended party on an earlier occasion at which time they were unavailable, a message to this effect is generated and presented to the shopper at step 223 as exemplified by the web page illustrated in Figure 8-2. Process flow then resumes at step 230, where a determination is made as to whether the party to whom the basket contents is being shared is currently on-line and logged into the service provided by the web site 112.

At least one advantage of the present invention over the prior art is the ability of the server 112 to immediately determine whether a person to whom the contents of the metaphorical electronic shopping cart (selection information) is to be shared is at that time presently available to the on-line shopping service (as evidenced by the co-shopper also be logged onto the server 112, which would be known to the server). If the party to which the purchase information is to be disclosed (the "co-shopper"), is not presently logged onto the server 112, a determination is made in step 232 to identify whether or not that party can be reached via e-mail, instant messaging (or alternatively, albeit not shown, a phone call, a paging message or a wireless communication device) to advise that party that the shopping cart is being shared. Other means for contacting a co-shopper beyond an e-mail message sent via the Internet are considered herein to be networked communications devices, albeit devices coupled to a network separate and apart from the Internet. Inasmuch as the Internet constitutes a first network, any other network by which a co-shopper might be reached (telephone, paging, cellular) is considered to be a second network.

Instant messaging is a technology and method for on-line Internet users to "chat" with one another in real time or nearly real time. Two instant messaging users can exchange typed messages nearly simultaneously much like a conversation takes place albeit with typed text. One example of instant messaging is available from America On-Line via its AOL Instant Messenger™ service.

In step 234, if instant message service is available to the co-shopper, the vendor's web server 102 preferably sends a message to the co-shopper via the instant messaging service notifying them of a shared shopping basket and providing a web link to the shopping services web site. If instant messaging service is not available to the co-shopper, in step 236, the vendor's web server can alternatively send an e-mail message, presuming that the co-shopper has an e-mail address, thereby notifying them of the shared basket and providing a web link to the shopping services web site. A phone call or message via a wireless communication device could also be used to reach the co-shopper.

Whether the unavailable co-shopper has instant messaging or e-mail, or is notified by phone or pager, in step 238 a message is generated to the shopper or person making the selections for the basket such that the error message displayed in Figure 8-1 which is an exemplary web page display advising the shopper that the co-shopper is not presently available to the server 112. Program control returns to the main program loop depicted in Figure 2-1 at step 240.

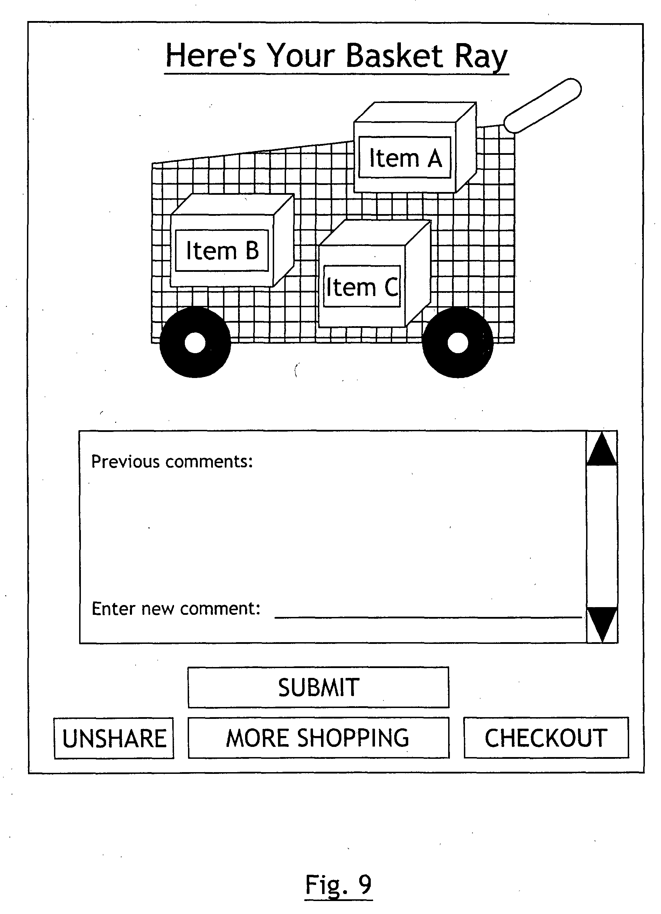

At step 230 in Figure 2-2, if the co-shopper is logged onto the server 112, in step 242 program flow is transferred to program loops depicted in Figure 2-3. In step 244, the vendor's web server notifies the shopper making the original shopping decisions (who logged in at step 206) that the intended co-shopper has access to and is viewing the contents of the metaphorical electronic shopping basket. In step 246, the exemplary web page depicted in Figure 9 is transmitted to the shopper.

The exemplary web page shown in Figure 9 includes a field for the entry of comments, which will be henceforth displayed to all viewers of the shared basket. Steps 248 and 250 depict the method steps by which the shopper can add notes or other annotations to the basket, which will be displayed to both the shopper and co-shopper in their subsequent basket views. In step 248, if no annotation is added, an option is presented in step 252 to allow the shopper to perform yet more purchasing by returning program control in step 254 to the main programming loop shown in Figure 2-1. Alternatively, the electronic shopping session can be concluded in step 256.

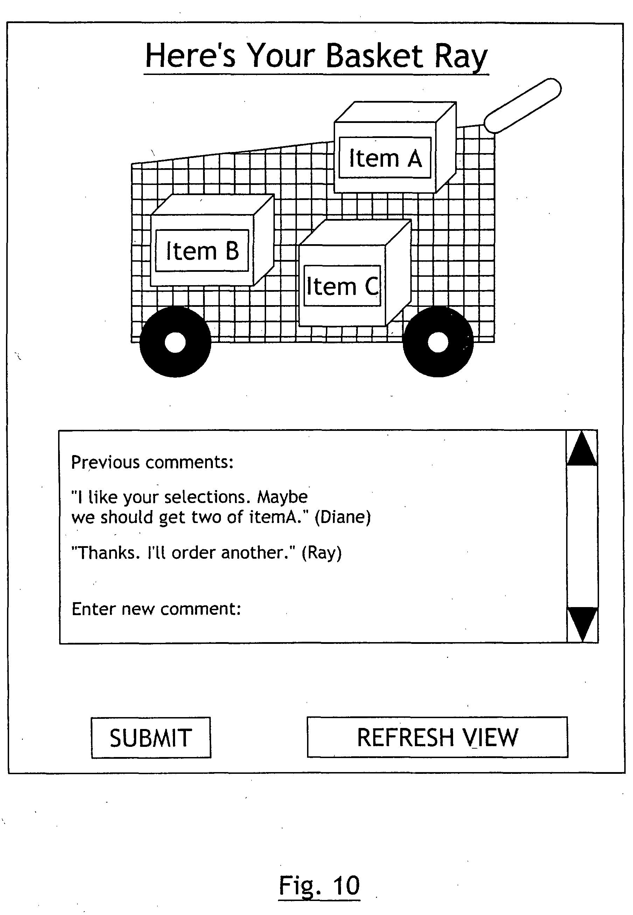

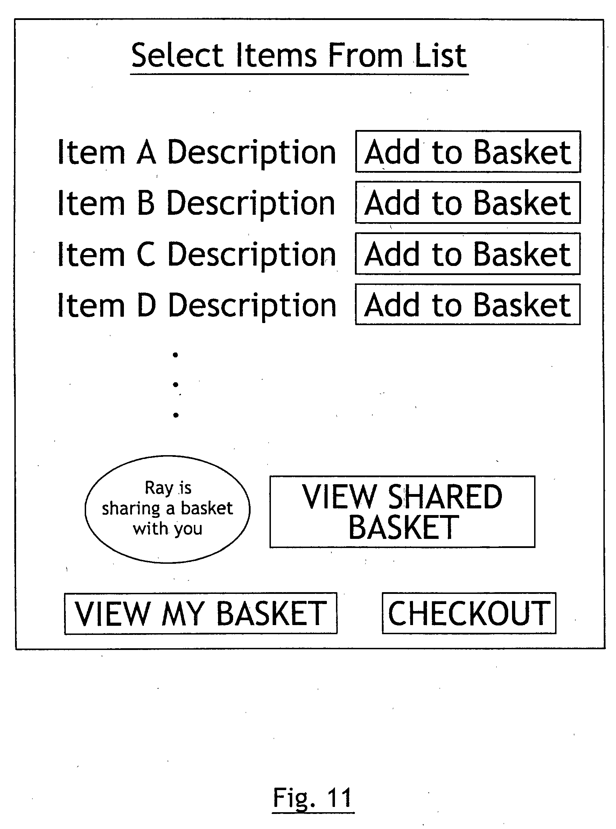

In step 258, (program control from step 242) an intended co-shopper (notified by some method discussed above if they were originally unavailable) is provided an Internet web link to view the basket contents in the web page presented after their next interaction with the shopping service. Figure 11 shows an exemplary web page as may be presented to the intended co-shopper that notifies them of the intent by the shopper to share a basket and also provides a web link, in the form of a metaphorical button, to view the shared basket contents. In step 260 by selecting the web link address to the shared basket, a co-shopper can view the contents of the electronic shopping basket. By appropriately configuring the server software, the co-shopper can view the contents of the electronic shopping basket but can also add items to the basket, delete items from the basket or comment on the contents via a dialog box. Figure 10 shows an exemplary depiction of a co-shopper's shared basket view as a result of step 262 with the possibility of adding annotations provided in steps 264 and 265. Any comments or questions entered into the comment field become part of the shared basket view, and are accessible to the shopper for review and consideration by the server, which receives the comments from the co-shopper via the web, then, sends the co-shoppers comments back to the original shopper. An on-line or interactive dialog between the shopper and co-shopper can then become possible via the interface between the two parties provided by the vendor's web server computer.

Those skilled in the art will recognize that the design and operation of web pages as they are known is defined and controlled using a hypertext markup language ("HTML"). HTML provides a standard set of rules that define how a web page is to be displayed on a computer. The operation of a web page, including the placement and operation of buttons or synthesized areas on a computer's screen the selection of which by a mouse click causes some action to be undertaken by the computer is well known to those skilled in the art of web design and HTML programming.

While the preferred embodiment contemplates the transaction of commercial purchases of goods, it is readily apparent that the invention described and claimed herein finds equal application with the purchase of services as well as the possible leasing or rental of goods in addition to outright purchasing. By way of example, the methodology disclosed herein might be used to buy goods from a mass merchandiser but might also be used to buy services from service providers such as airlines, ticket agencies, restaurants, and the like. In all embodiments, in addition to reviewing product or service selections, a co-shopper can be authorized to add items to or delete items from the electronic basket.

In one embodiment of the invention, the on-line vendor might be a vendor of stock photographs that one or more people of an organization may wish to purchase. One person might make selections of photographs to be purchased but reserve actually consummating the transaction until others in the organization have had a time to review and approve of the selections. By providing a shared or collaborative on-line shopping cart metaphor, one person can make a selection and share those selections including the descriptions and costs thereof with others prior to effecting the transaction.

In another embodiment, features of a car to be purchased, leased or rented might be specified by one person (make, model, year, color and optional equipment) and reviewed by another, before during or after the order is actually placed. Maintenance records of vehicles might be specified by one person and shared with others who are responsible for doing the work. The salient aspect of the invention is that records in a database that is resident on a computer which is coupled to an open data network like the internet, and which are specified by one person, can be shared with other parties via the data network subject to the proviso that such parties be identified by the party that created the record to be shared.

As used in the appended claims, "items" and/or "items offered for purchase" should be construed to include items for rental, lease or maintenance as well as services offered by a service provider. "Vendor" should also be construed to read on a leasing or rental agent or service provider. By using the disclosed invention, in any organization where a purchasing agent or an individual responsible for buying commodity items, his or her purchases or selections can be reviewed by the intended recipients or users of the goods prior to completing the transaction.

In yet another embodiment, a large multi-national corporation that requires the acquisition of large quantities of office supplies might authorize several individuals in the organization to make such purchases. A purchasing manager to whom authorization is given to review the purchases, might be able to oversee the purchases of his associates prior to the completion of the transactions as a part of cost control or loss prevention measures.

## Claims

1. A method for enabling the conduct of electronic commerce between a vendor and two or more parties via a data network comprising the steps of:
sending from a server computer to a first client computer via the data network, information for a plurality of items offered by the vendor (208);
selecting from said plurality of items in accordance with a choice made at said first client computer by a first party, a first item of said vendor (210); and
enabling said server computer to provide to a second client computer via the data network, notification of said first item selection (218).

2. The method of claim 1 further comprised of the step of enabling said second client computer to select, via the data network, a second item of the vendor on behalf of said first party, independently of said first party (252).

3. The method of claim 1 further comprised of the step of notifying said second client computer of its enablement to view said first item selection.

4. The method of claim 1 further comprised of the step of determining if said second client computer is operatively coupled to the data network (230).

5. The method of claim 1 further comprised of the step of conveying message from said first client computer to said second client computer (250).

6. The method of claim 1 further including the step of deleting said first item in accordance with an instruction from said second client computer (264).

7. The method of claim 1 further comprised of the steps of:
receiving from said first client computer, a designation of a second client computer with whom selection information about said first item is to be provided by said vendor;
sending from said first server computer to said second client computer, selection information about said first item that said second party can review (258); and
enabling said second party to select a second item from said first server computer independently of said first party (265).

8. Apparatus for enabling electronic commerce between a vendor and two or more parties via a data network comprising:
a server computer (112) that sends information for a plurality of items offered for purchase by the vendor, to a first client computer via the data network;
a selection receiver coupled to the data network, that enables a first party to select a first item for purchase from the vendor via said first data network;
an enabler that allows said server computer to provide to a second client computer via the data network, information about said first item for purchase; and
a transmitter that conveys to said second client computer via said data network, information about said first item for purchase.

9. The apparatus of claim 8 wherein said server computer means is a web site server.

10. The apparatus of claim 8 further comprising a data storage (113) coupled to said server computer and containing said information
